# EUROPEAN PATENT APPLICATION

(11) **EP 2 482 522 A1**
(43) Date of publication of application: **01.08.2012**
(21) Application number: 12153105.7
(22) Date of filing: 30.01.2012
(51) Int. Cl.: H04L 29/06, H04L 12/26

(54) **A method and apparatus for identifier correlation**

(30) Priority: 01.02.2011 GB 201101723; 16.12.2011 GB 201121708
(71) Applicant: Roke Manor Research Limited, Romsey Hampshire SO51 0ZN (GB)
(72) Inventor: McDonald, Andrew Derek, Romsey, Hampshire SO51 7UN (GB); West, Mark Alan, Romsey, Hampshire SO51 5RQ (GB); Hancock, Robert Edward, Salisbury, Wiltshire SP1 1LJ (GB)
(74) Representative: Thompson, Andrew John

(57) **Abstract**

A method of identifier correlation in a communications network, the network comprising: an identifier translator, for translating at least one of a communications packet, wherein a packet which has passed through the identifier translator comprises translated and untranslated identifiers; the method comprising: selecting a first packet prior to transmission through the identifier transtator_{;} selecting a second packet after transmission through the identifier translator which has at least one identifier which is the same as a corresponding identifier of the first packet; and correlating at least one identifier from the first packet which is different to a corresponding identifier of the second packet.

## Description

The present invention relates to a method and apparatus for identifier correlation.

### Background to the Invention

A Network Address and Part Translator (NAT or UNAPT) is commonly used to share a single public Internet address across multiple devices. The same technique is starting to be used by Internet Service Providers (ISPs) to allow them to share a pool of public Internet IP addresses across a large number of subscribers. It can also be used for other purposes, including allowing re-allocation of addresses on one side of a NAT without changing addresses on the other side. Alternatively, a NAT can be used to allow the use of different versions of Internet Protocols (IP) each side of the NAT.

Each subscriber is allocated a 'private' IP address, and a NAT translates the address using an address from its pool of 'public' IP addresses. The NAT stores this mapping, and uses it to perform consistent translation of further packets in the same data flow, The address is typically translated in conjunction with higher layer identifiers, such as ports.

An ISP may receive reports of network abuse (e.g. spam or hacking) which contain the public IP address (and possibly higher layer identifiers) used by the subscriber. Without knowing the NAT mapping used, the ISP is not able to identify the subscriber. The same problem arises in fulfilling requests from law enforcement agencies when they request information about a subscriber based on a public IP address.

ISPs do not commonly configure their NATs to log the mappings used. This may not be possible because the NAT lacks a logging feature, or because enabling logging would have an adverse impact on NAT performance (e.g. because logging is only designed to be used for diagnostic purposes, not large volume logging).

### Summary of the invention

In a first aspect, the present invention provides, a method of identifier correlation in a communications network, the network comprising: an identifier translator, for translating at least one identifier of a communications packet, wherein a packet which has passed through the identifier translator comprises translated and untranslated identifiers; the method comprising: selecting a first packet from a first side of the identifier translator prior to transmission through the identifier translator; selecting candidate packets from a second side of the identifier translator after transmission through the identifier translator; determining if said candidate packets include a packet matching said first packet; and storing at least one identifier from the first packet with at least one identifier from the matched packet as a correlated pair, wherein the at least one identifier of the matched packet is a translated identifier

In a second aspect, the present invention provides an apparatus for identifier correlation in a communications network, the apparatus comprising: an identifier translator, for translating at least one identifier of a communications packet, wherein a packet which has passed through the identifier translator comprises translated and untranslated identifiers; a first packet selector for selecting a first packet from a first side of the identifier translator prior to transmission through the identifier translator; a second packet selector for selecting candidate packets from a second side of the identifier translator after transmission through the identifier translator; and a correlation engine for determining if said candidate packets include a packet matching said first packet and for storing at least one identifier from the first packet with at least one identifier from the matched packet as a correlated pair, wherein the at least one identifier of the matched packet is a translated identifier.

Further features of the invention are defined in the appended dependent claims.

### Brief Descrition of the Drawings

By way of example only, the present invention will now be described with reference to the drawings, in which:
Figure 1 shows a network in accordance with an embodiment of the invention;
Figure 2 shows a flow chart of an overview of an embodiment of the present invention;
Figure 3 shows a flow chart of the packet selection process according to an embodiment of the present invention;
Figure 4 shows a flow chart of the process of calculating an inferred payload checksum according to an embodiment of the present invention;
Figure 5 shows a flow chart of the process of metadata calculation according to an embodiment of the present invention;
Figure 6 shows a flow chart of the process of flow length calculation according to an embodiment of the present invention; and
Figure 7 shows a flow chart of the process of correlation according to an embodiment of the present invention.

### Detailed Description of Preferred Embodiments

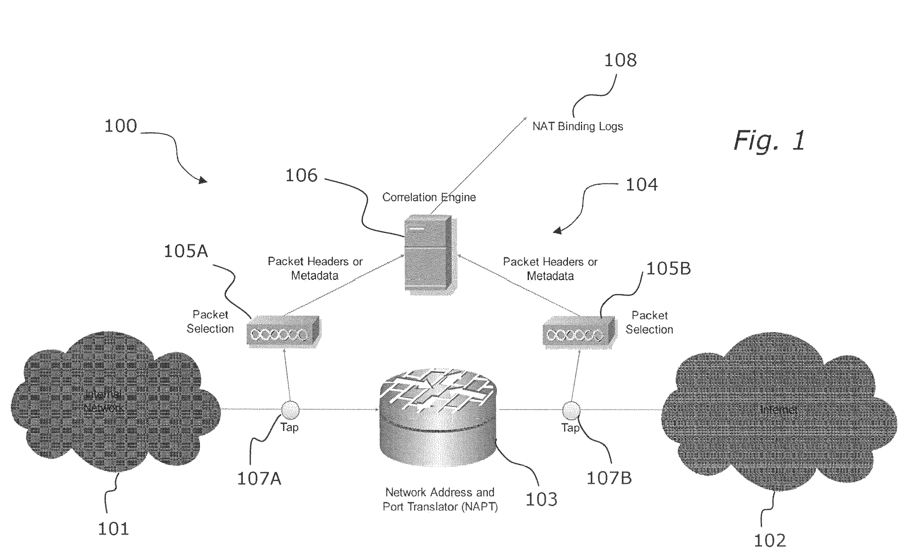

Figure 1 shows a network 100 in accordance with a first embodiment on the invention. Network 100 includes an internal network 101, and an external network 102. External network 102 may be a public network, such as the Internet. The network 100 also includes a Network Address Translator (NAT) 103. All traffic passing between the internal network 101 and the external network 102 passes through NAT 103.

The network 100 also includes an Address Correlation Engine (ACE) 104. The ACE 104 includes a packet selection component having two packet selectors 105A and 105B which each select a subset of packets from the network traffic on each side of the NAT 103 to use in correlation. In theory, the packet selectors 105A and 105B could select all packets, but this would be unlikely in practise. The ACE 104 also includes a packet processing component having a correlation engine 106 which performs field extraction, processing and comparison of extracted information between packets from each side of the NAT 103. The packet selectors 105A and 105B and the correlation engine 106 may be separate devices, or embodied in a single device. Their functionality may be implemented in hardware or in software, The packet collectors are coupled to the transmission line carrying the data flow through the NAT 103 by taps 107A and 107B. Packets could be selected in other ways, as will be appreciated by the person skilled in the art. The operation of the ACE 104 will now be described. This process may be applied to any suitable protocol and is not specific to a particular protocol, such as TCP. Further details of each part of the process will now be described.

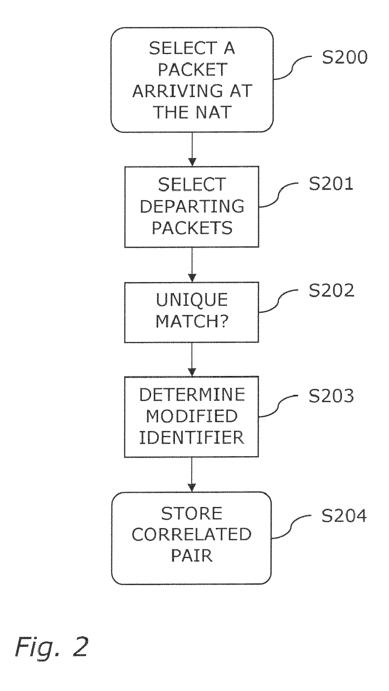

Before describing the process of correlating identifiers in detail, an overview of one embodiment will be described in connection with Figure 2. The aim of the process is to extract the same packet from each side of the NAT 103, establish which identifiers have been modified by the NAT, and to store the original identifier and the modified identifier as a correlated pair. The first step is to select a packet arriving at the NAT 103 (S200). The packet may be arriving from either the private or public side of the NAT 103. The next step its to select one or more packets departing from the opposite side of the NAT 103 (S201). The next step is to determine if the selected departing packets include a unique match for the packet selected from the incoming side (S202). If there is a unique match, the packets are compared to determine which identifier has been modified by the NAT 103 (S203). The original identifier and the modified identifier are then stored as a correlated pair (S204). Further details of each of these steps will now be described.

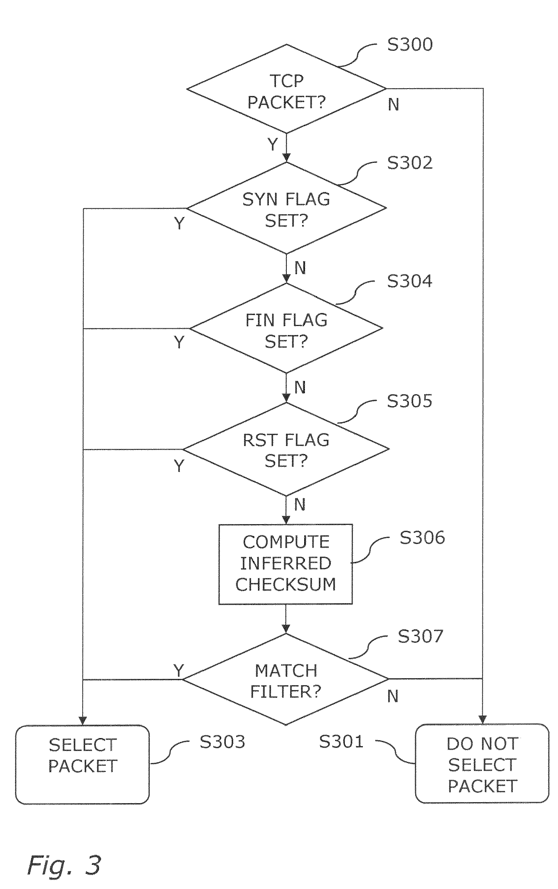

In the following embodiment, the process of carrying out identifier correlation for packets being transmitted from Network 101 to the internee 102 will be described. The first stage of the process is for the packet selector 105A to select a suitable packet from the outgoing data stream. This process will be described in connection with Figure 3 which is a flow-chart showing the packet selection process. Packet selector 105A analyses every packet passing through tap 107A. The packet selector 105A, is programmed with a number of rules for packet selection. These rules ensure that only packets for which there is a higher chance of identification are selected. For example, packets with certain flags are typically chosen because there are a lower number of these packets, and hence they are easier to identify.

For a given packet, the packet selector first checks to see if the packet is a TCP packet (S300). If the selected packet is not a TCP packet, the packet is rejected (S301). If the packet is a TCP packet, the process moves to the next stage. This embodiment is concerned only with TCP packets. Similar rule based packet selection may be implemented for DNS, SIP and other types of traffic.

The packet selector 105A then determines if the 'SYN' flag is set in the TCP header (S302). If the 'SYN' flag is set, the packet selector 105A selects the packet (S303). If the 'SYN' flag is not set, the selector 105A determines if the 'FIN' flag is set (S304). If the 'FIN' flag is set, the packet selector 105A selects the packet (S303). If the 'FIN' flag is not set, the selector 105A determines if the 'RST' flag is set (S305). If the 'RST' flag is set, the packet selector 105A selects the packet (S303). If the selector 105A determines that the 'RST' flag is not set, the selector computes an inferred payload checksum (S306).

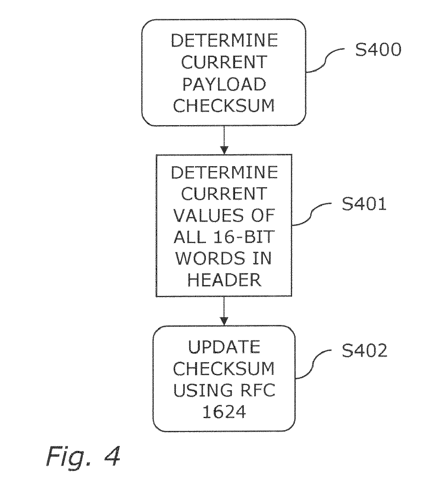

The process of determining the inferred payload checksum will be described with reference to Figure 4. Firstly, the packet selector 105A determines the current payload checksum from the TCP header (S400). The current values of all 16-bit words in the TCP header, excluding the checksum, and in the IP pseudo-header are determined (S401). The checksum is then updated using the incremental update algorithm specified in RFC 1624 by changing the value of each 16-bit word to zero (S402). When the checksum is calculated, the selector 105A determines if the calculated checksum matches a predetermined checksum value or a predetermined range of checksum values (S307). If the checksum matches the predetermined value, or falls within the predetermined range of values, the packet is selected (S303). If the checksum does not match, the packet is not selected (S301). The checksum is not modified by the NAT 103, and will be the same when calculated for a packet passing through selectors 105A and 105B, meaning the same packet can be identified on both sides of the NAT 103. The inferred payload checksum is calculated and compared against a predetermined value or range of values in order to enable the system to select a subset of packets, rather than every packet.

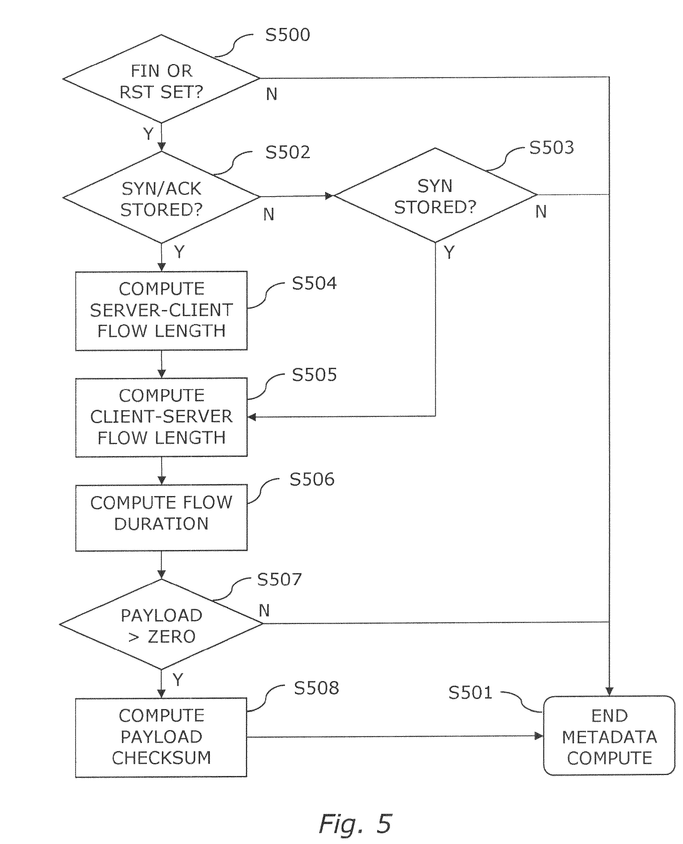

When a packet has been selected, the correlation engine 106 calculates packet metadata. Packet metadata includes data flow length, payload checksum and flow duration. Metadata is used by the ACE 104 to assist with correlation. The process of matada calculation will be described with reference to Figure 5. The following process assumes that the selected packet is a TCP packet,

The correlation engine 106 determines if the selected packet has the FIN or RUST flag set (S500). If these flags are not set, no metadata is calculated, and the process exits (S501). This is because FIN or RUST packets are required to determine metadata such as flow length. If the FIN or RST flag is set, the correlation engine 106 determines whether the SYN/ACK is stored for this flow (S502). If the SYN/ACK is not stored, the correlation engine 106 determines if the SYN is stored (S503). If the SYN/ACK is stored, the correlation engine 106 computes the server-client flow length (S504). If the correlation engine determines that the SYN is stored at S503, the correlation engine 106 computes the client-server flow length (S505). If the SYN is not stored, no metadata is calculated and the process exits (S501). Once the server-client flow length has been computed at S504, the correlation computes the dent-server flow length (S505).

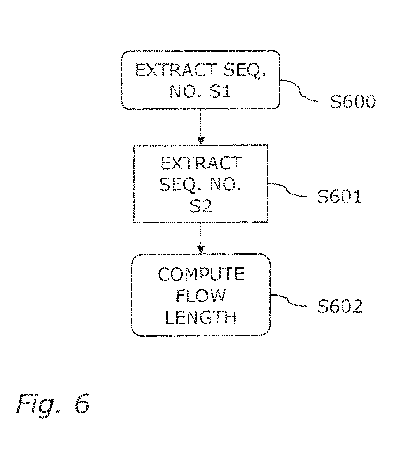

In each of the above instances, flow length is calculated in accordance with the process shown in Figure 6. Initially, sequence number S1 is extracted from the SYN or SYN/ACK packet (S600). Then, sequence number 52 is extracted from the FIN/RST packet (S601). Finally, the flow length its calculated to be (S2 - S1) modulo 2³² (S602).

Following computation of the flow lengths, the correlation engine 106 computes the flow duration time, i.e. the time between the SYN and the FIN flag packets (S506). The correlation engine 106 then determines if the payload for the selected packet is greater than zero (S507). If the payload is zero, the process exits (S501). If the payload is not zero, the correlation engine determines the payload checksum in the manner described in connection with Figure 4 (S508). The process then exits (S501)

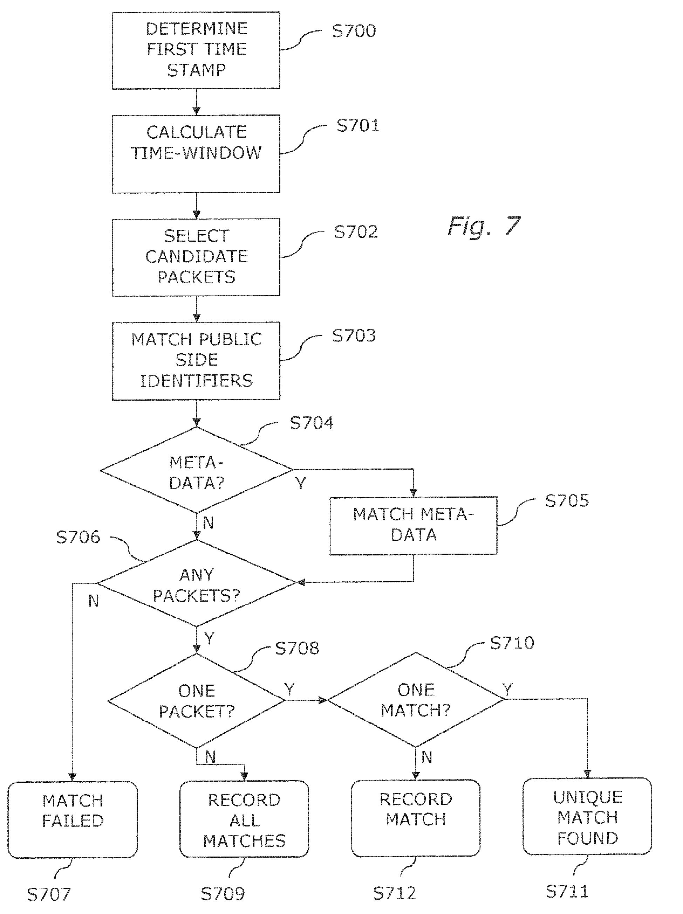

Once a packet has been selected, that packet must be correlated with the same packet on the other side of the NAT 103. The process of correlation will be described with reference to Figure 7, which is a flow-chart showing the correlation process. The first step of the process is to determine a time that the selected packet passes through the tap 107A, and hence a time-window that the packet will pass through the tap 107B (S700). The correlation engine 106 then calculates a time-window during which a packet passes through the tab 107B (S701).. Once the time window has been set, the selector 105B selects candidate packets (S702). Candidate packets are all packets which pass through the tap 107B during the first time-window.

In this example, packet selector 105A is arranged to generate a time stamp (timestamp1) when a packet passes through the tap 107A. Packet selector 105B is arranged to generate a time stamp (timestamp2) when a packet passes through the tap 107B. The time delay between the tap 107A and the packet selector 105A is a minimum of 1ms and a maximum of 2ms. For a given value of timestamp1, the earliest actual packet arrival at tap 107A is timestamp1 - 2ms. The latest actual arrival time is timestamp1 - 1ms. The time delay between the tap 107B and the packet selector 1058 is a minimum of 5ms and a maximum of 7ms. For a given value of timestamp2, the earliest actual packet arrival time at tap 107 is timestamp2 - 7ms. The latest actual arrival time is - 5ms. The delay imposed on a packet passing through the NAT 103 is between 15ms and 25ms.

Accordingly, the earliest time a packet passing from tap 107A to tap 107B though the NAT 103 is timestamp1 - 2ms + 15ms; i.e. timestamp1 + 13ms. The latest time a packet passing from tap 107A to tap 107B though the NAT 103 is timestamp1 - 1ms + 25ms; i.e. timestamp1 + 24ms. This is the time-window. The actual time that a packet passes through tap 107B is in the range timestamp2 - 7ms to timestamp2 - 5ms. A pair of packets are candidates for selection of the two window's overlap.

Once the time window has been set, the selector 105B selects candidate packets (5702). The candidate packets are compared with the selected packet, to determine which candidate packets have the same public side identifiers as the selected packet (5703). For example, the correlation engine 106 may compare destination addresses, in order to identify packets destined for the same end point. When this process is applied to incoming packets, the source addresses may be compared to identify packets originating from the same server.

The candidate packets now only include packets destined for the same server. The next stage is to look for packets within the candidates which has the same metadata (i.e. flag, flow length, flow duration or checksum) as the selected packet. The correlation engine 106 therefore selects packets from the candidates which have the same metadata as the selected packet (5704). The set of candidates is then reduced to those packets which have matching metadata (5705).

At this stage, the correlation engine 106 has a set of candidates, which either includes many, one or no matches. The correlation engine 106 determines whether or not the set includes any packets (5706). If not, the match fails, and the process ends (5707). If there is at least one candidate, the correlation engine determines whether or not there is only one candidate (S708). If not, the engine records all possible matches and logs this as an ambiguous case (5709). If there is only one candidate, the engine determines if it matches just the selected packet, or if it matches other packets (S710). If there is a one-to-one relationship, the match is recorded as a unique relationship (S711). If there is more than one match, the match is recorded as an ambiguous match (S712).

Where the correlation engine 106 finds a match, the source address of the packet located by one packet selector is stored together with the source address of the packet located by the other packet selector. The pair oaf addresses is stored as a correlated pair. For example, a packet being sent from the internal network 101 to the external Network 102 may have a first, private IP source address when it leaves the internal network 101. The NAT 103 then substitutes for this a public source IF address. This pair of IP addresses is stored as a correlated pair in a NAT binding log 108. Accordingly, if the identity of the subscriber using a particular public IP address needs to be established, the NAT binding log 108 provides the necessary correlation information.

The above described packet selection approach is stateless, which aids performance. In other words, there is no state in the packet selector 105A and 1058 which needs updating based on packets passing through them, It is also deterministic which increases confidence in producing repeatable results. Where users are accessing a popular server, there may be a number of candidate matches. Accordingly, the use of metadata helps the chances of selecting the correct packet. The combination of the above-noted techniques ensures a high degree of confidence in the result, and low false positive matching.

TCP 'FIN' packets may contain content (payload) which the correlation engine 106 may use in matching these packets across the NAT. The correlation engine 106 may directly compare the content of candidate packets from each side of the NAT 103. However, it may be preferable to avoid content inspection and work solely from inspection of packet headers. In this case the TCP checksum is used to compare content. The checksum component derived from the packet headers is first removed from the TCP checksum before the comparison is performed. This enables the checksum comparison to ignore any modifications made to the packet headers (e.g. changing addresses, removing TCP options, etc).

The same approach could be expanded from TCP to cover other protocols, e.g. SCTP and DCCP. The concept of matching 'SYN' may be generalised to 'start of flow indicator'. The concept of matching 'FIN' may be generalised to 'end of flow indicator'. The concept of matching 'RST' may be generalised to 'error message indicator'.

Additional packet sampling can also be used. This applies to connectionless protocols (e.g. UDP), as well as connection oriented protocols (e.g. TCP). This might include selection for a particular pattern of bits in header and/or payload. A of masks could be used to select packets for particular services of interest, and will select a subset of packets from other flows according to some deterministic sampling criteria. For example, one pattern might select DNS request packets, but would also match some packets from a Voice over IP media stream. This method is used to ensure that the packet selection on each side of the NAT 103 is deterministic, so that the same packet is selected on both sides of the NAT.

For long-life connection-oriented protocols, these additional sampling techniques enabling additional input to the correlation to be calculated, without waiting for the end of the flow.

A further extension would compare events derived from the application protocols running above TCP (or other transport protocol). For example, SIP call set up (INVITE) events could be extracted from each side of the NAT. Information about the communication data event (e.g. call identifier, call destination) would be used to perform the correlation.

Prior art techniques are to configure a NAT to emit logs, Embodiments of the present invention avoids interaction with the operation of the NAT 103. Accordingly, the embodiments of the present invention avoid the performance impact that enabling logging might have. It will be appreciated that the present invention is not limited to any particular NAT implementation.

Embodiments of the present invention only require the inspection of a small number of packets, compared to the total amount of traffic. Embodiments of the invention requires a minimal amount of state for packet selection. The packet selection methodology is deterministic. The state required for packet selection is static, and does not need to be dynamically created or updated, although it may be updated (for example to modify the selection criteria) if desired.

Although the embodiments of the present invention could examine packet content, this is not necessary. Examining packet content can be avoided completely in circumstances where this is not permissible.

Prior art approaches (e.g. just based on connection setup) fail to correlate when many connections are seen to a common destination (e.g. many users accessing popular websites). Embodiments of the present invention provide a method and apparatus which produce results having a high likelihood that the correlation result is correct.

There is no for time synchronisation between the packet selection on each side of the NAT. There is also no requirement for consistent ordering of packets, and no requirement for the NAT not to reorder packets.

Features of the present invention are defined in the appended claims. While particular combinations of features have been presented in the claims, it will be appreciated that other combinations, such as those provided above, may be used.

The above embodiments describe one way of implementing the present invention. It will be appreciated that modifications of the features of the above embodiments are possible within the scope of the independent claims.

## Claims

1. A method of identifier correlation in a communications network, the network comprising:
an identifier translator, for translating at least one of a communications packet, wherein a packet which has passed through the identifier translator comprises translated and untranslated identifiers; the method comprising:
selecting a first packet from a first side of the identifier translator prior to transmission through the identifier translator;
selecting candidate packets from a second of the identifier translator transmission through the identifier translator;
determining if said candidate packets include a packet matching said first packet; and
storing at least one identifier from the first packet with at least one identifier from the matched packet as a correlated pair, wherein the at least one identifier of the matched packet is a translated identifier,

2. A method according to claim 1, further comprising determining a time-window, after selection of the first packet, wherein the candidate packets only include packets passing a predetermined point within the time-window.

3. A method according to claims 1 or 2, wherein said candidate packets only include packets which have at least one identifier which is the same as the first packet, the matching identifier being an untranslated packet.

4. A method according to claims 1, 2 or 3, further comprising calculating metadata for the first packet, wherein said candidate packets only include packets which have the same metadata as the first packet.

5. A method according to any preceding claim, wherein at least one of the identifiers is an address.

6. A method according to claim 5, wherein the identifiers include source and destination addresses and for said candidate packets, one of said addresses is a translated address and one of said addresses is an untranslated address.

7. A method according to any preceding claim, wherein only packets having an indicator flag set are selected.

8. A method according to claim 8, wherein said indicator flag is a start of flow indicator, an end of flow indicator and/or, an error message indicator.

9. A method according to claim 4, wherein said metadata includes calculated flow lengths.

10. A method according to claim 4, wherein said metadata includes checksums.

11. An apparatus for performing the method of any of claims 1 to 10.

12. A computer program comprising code which, when run on a computer, would cause the computer to perform the method of any of claims 1 to 10.

13. A computer readable medium having code stored thereon which, when run on a computer, causes the computer to perform the method of any of claims 1 to 10.

14. An apparatus for identifier correlation in a communications network, the apparatus comprising:
an identifier translator, for translating at least one identifier of a communications packet, wherein a packet which has passed through the identifier translator comprises translated and untranslated identifiers;
a first packet for selecting a first from a first side of the identifier translator prior to transmission through the identifier translator;
a second packet selector for selecting candidate packets from a second side of the identifier translator after transmission through the identifier translator; and
a correlation engine for determining if said candidate packets induce a matching said first packet and for storing at least one identifier from the first packet with at least one identifier from the matched packet as a correlated pair, wherein the at least one identifier of the matched packet is a translated identifier.
